(19) Europäisches Patentamt

European Patent Office

Office européen des brevets

(11) Veröffentlichungsnummer: **0 314 892 B1**

(12) **EUROPÄISCHE PATENTSCHRIFT**

(45) Veröffentlichungstag der Patentschrift: **11.11.92**

(21) Anmeldenummer: **88114179.0**

(22) Anmeldetag: **31.08.88**

(51) Int. Cl.⁵: **G01B 11/06**, G01B 11/30, G01N 21/55

(54) **Sensoreinrichtung.**

(30) Priorität: **30.09.87 DE 3732934**

(43) Veröffentlichungstag der Anmeldung:
**10.05.89 Patentblatt 89/19**

(45) Bekanntmachung des Hinweises auf die
Patenterteilung:
**11.11.92 Patentblatt 92/46**

(84) Benannte Vertragsstaaten:
**CH DE FR GB LI**

(56) Entgegenhaltungen:
**EP-A- 0 126 613          EP-A- 0 177 921
CH-A- 389 935          DD-A- 145 956
DE-A- 2 055 708          DE-A- 3 312 948
DE-A- 3 414 573**

(73) Patentinhaber: **Heidelberger Druckmaschinen
Aktiengesellschaft
Kurfürsten-Anlage 52-60 Postfach 10 29 40
W-6900 Heidelberg 1(DE)**

(72) Erfinder: **Kipphan, Helmut, Prof. Dr.
Bibiena Strasse 6
W-6830 Schwetzingen(DE)**
Erfinder: **Haase, Josef, Dipl.-Ing.
K. Lindemannstrasse 8
W-6903 Neckargemünd(DE)**

(74) Vertreter: **Stoltenberg, Baldo Heinz-Herbert et
al
c/o Heidelberger Druckmaschinen AG
Kurfürsten-Anlage 52-60
W-6900 Heidelberg 1(DE)**

# Beschreibung

Die Erfindung bezieht sich auf eine Offsetdruckmaschine mit einer Sensoreinrichtung zur Bestimmung der Feuchtmittelmenge auf einer Oberfläche einer Offsetdruckplatte.

In der DE-OS 33 04 780 ist eine Vorrichtung zur Ermittlung einer Oberflächenstruktur bekannt geworden, bei der das von der Oberfläche reflektierte Licht über ein Lichtdetektorarray bestimmt wird, wobei das Lichtdetektorarray derart angeordnet ist, daß es vom spiegelnd reflektierten Strahl mittig getroffen wird. Das erste bzw. das zweite Moment der Streulichtverteilung liefert einen optischen Kennwert, der als Maß für die Rauhigkeit der Oberfläche zu werten ist. Diese Vorrichtung ist dazu geeignet, relativ glatte, trockene Oberflächen zu untersuchen. Die erreichbare Auflösung der Vorrichtung ist zur Bestimmung einer auf einer Oberfläche befindlichen Feuchtmittelmenge nicht hinreichend. Hinweise in diese Richtung sind dieser Schrift nicht zu entnehmen.

Ein Beispiel für die bisher üblichen Verfahren zur Messung der Feuchtmittelmenge im Offsetdruck ist aus der DE-OS 34 44 784 bekannt geworden. In dieser Offenlegungsschrift wird ein Verfahren zur überwachung des Farbstoff-Wasser-Verhältnisses beschrieben. Um eine Aussage über das Farbstoff-Wasser-Verhältnis zu erhalten, wird ein Farb- und Feuchtmittel führender Bereich einer Farbauftragswalze mit einer Lichtquelle beleuchtet. Die aus diesem Bereich reflektierte Strahlung wird sowohl in Richtung der spiegelnden Reflexion als auch in Richtung der diffus gestreuten Reflexion gemessen und ausgewertet. Die Auswertung der gemessenen Größen erfolgt derart, daß aus dem spiegelnd reflektierten Strahlungsanteil die auf der Farbschicht liegende Feuchtmittelmenge bestimmt wird, während aus dem diffus gestreuten Strahlungsanteil die Menge des in die Farbe emulgierten Feuchtmittels bestimmt wird. Ein dritter Meßwert dient zur Bestimmung der Tröpfchengröße des in die Farbe emulgierten Feuchtmittels.

Nachteilig bei diesem Verfahren wirkt sich aus, daß die Auflösung hinsichtlich der drucktechnisch relevanten Feuchtmittel-Schichtdicken im $\mu$m-Bereich unzureichend ist. Wegen der geringen Empfindlichkeit ist dieses Verfahren im Fortdruck nur bedingt einsetzbar. In der Einrichtphase ist es kaum wirksam. Problematisch ist weiterhin, daß der Zustand der Oberfläche, der von dem Fertigungsmaterial und von anderen Kriterien, beispielsweise dem Verschleiß, abhängt, ein unterschiedliches Streuverhalten zeigt. Daher ist dieses Verfahren zur Messung des Farbstoff-Wasser-Verhältnisses auf der Druckplatte nicht geeignet.

Die Aufgabe der Erfindung lautet, eine Sensoreinrichtung zu schaffen, die eine sichere Aussage über die Feuchtmittelmenge auf einer Oberfläche ermöglicht.

Diese Aufgabe wird durch die Merkmale des Anspruchs 1 gelöst.

Die Erfindung ist darin zu sehen, daß eine bekannte Einrichtung, die bisher ausschließlich zur Messung der Rauheit einer Oberfläche herangezogen wurde, nunmehr zur Bestimmung der Feuchtmittelmenge angewendet wird, die sich auf dieser Oberfläche befindet. Entscheidend bei dieser Anwendung ist ebenfalls die Verwendung eines Strahlendetektorenelements, so daß nicht nur an wenigen Punkten der Streustrahlung, sondern an einer Vielzahl von Meßpunkten der Intensitätsverlauf der Streuindikatrix gemessen wird.

Weiterbildungsgemäß wird vorgeschlagen, die Wellenlänge der von der Beleuchtungseinrichtung erzeugten Strahlung innerhalb des IR-Bereichs zu legen. Dies hat den Vorteil, daß das Störlicht - beispielsweise Tageslicht oder Fremdlicht - die Messung nicht beeinflußt.

Es ist weiterhin in einer Ausgestaltung der Erfindung vorgesehen, die Kenngröße der Feuchtmittelmenge, die durch die Sensoreinrichtung ermittelt wurde, als Regelgröße in einem Feuchtmittel-Regelkreis zu benutzen. Die hohe Qualität der Kenngröße ermöglicht dabei eine besonders präzise, automatische Regelung des Feuchmittelauftrages auf der Druckplatte.

Die Regelung in der Einrichtphase erfordert das Vorgeben von Sollwerten, die u.a. abhängig von der Rauheit der verwendeten Druckplatte sind. Somit sind aus der Erfahrung ermittelte, druckplattenabhängige Sollgrößen abzuspeichern, die sowohl durch Messung an feuchtmittelfreien als auch an feuchtmittelführenden Druckplattenstellen gewonnen werden.

In der Fortdruckphase ist die Kenntnis von Absolutwerten nicht zwingend erforderlich. Für die Regelung genügt es, den als gut gefundenen Zustand zu speichern und somit den entsprechenden Wert als Sollgröße zu verwenden.

Es besteht gemäß einer Weiterbildung auch die Möglichkeit, die Art der Oberfläche durch die Messung zu bestimmen, d.h. verwendetes Material, Materialstruktur und Materialbeschaffenheit im trokkenen Zustand zu erkennen. Dies geschieht dadurch, daß eine Messung bei trockener Oberfläche vorgenommen wird und der Meßwert mit mehreren abgespeicherten Bezugswerten verglichen wird, wobei diese Bezugswerte jeweils eine bestimmte Art oder Struktur der Oberfläche repräsentieren. Durch diesen Vergleich kann der Typ der zu befeuchtenden Druckplatte festgestellt und die Feuchtmittelmengenregulierung auf diesen speziellen Typ abgestimmt werden.

Es besteht weiterbildungsgemäß auch die Möglichkeit, mit der Sensoreinrichtung die Rauheit der Oberfläche festzustellen und daraus ein Maß für die Abnutzung der Oberfläche abzuleiten. Damit läßt sich der Verschleiß einer Druckplatte kontinuierlich überwachen.

Weitere Vorteile der Erfindung und Ausgestaltungen sind in den abhängigen Ansprüchen und der nachfolgenden Beschreibung enthalten.

Die Erfindung wird anhand eines Ausführungsbeispiels näher erläutert.

Es zeigt:

Fig. 1      den schematischen Aufbau einer Sensoreinrichtung,

Fig. 2      den Streulichtverlauf bei verschiedenen Feuchtmittelmengen.

Im Offsetdruckverfahren ist es erforderlich, neben der genau dosierten Zufuhr von Farbe auch das Feuchtmittel, im allgemeinen Wasser mit Zusätzen, genau dosiert auf die Druckplatte zu übertragen, um ein bestimmtes Farb-Wasser-Gleichgewicht herzustellen, welches für ein gutes Druckergebnis erforderlich ist.

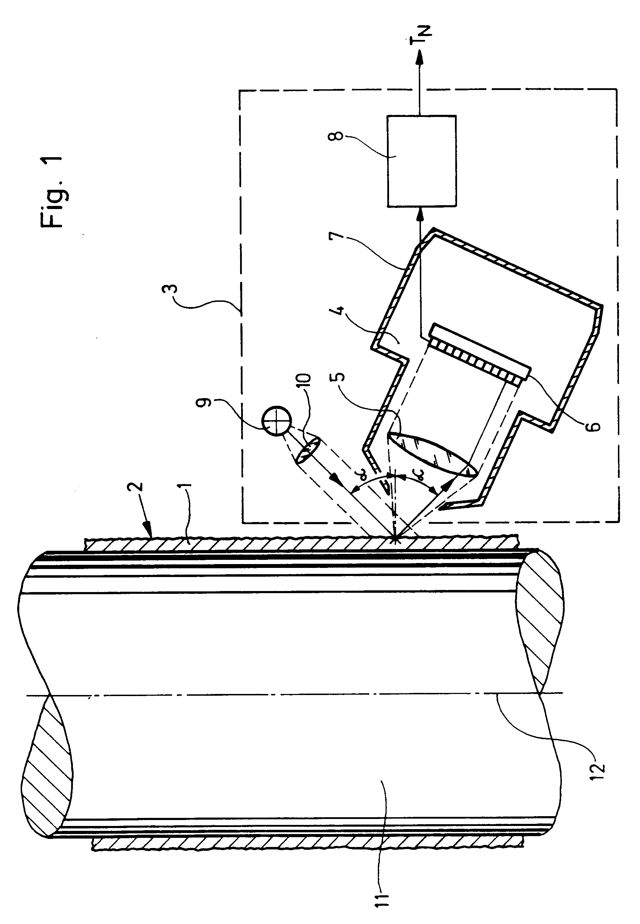

Die Messung der Feuchtmittelmenge erfolgt, wie aus Fig. 1 ersichtlich, auf der auf den Plattenzylinder 11 einer Offsetdruckmaschine gespannten Druckplatte 1, die bekanntlich eine aufgerauhte Oberfläche besitzt. Demzufolge wird die Meßeinrichtung - wie diese Figur zeigt - vor dem rotierenden Plattenzylinder 11 der Druckmaschine angeordnet. Die Druckplatte 1 ist stark vergrößert und lediglich in einem kleinen Ausschnitt gezeigt. Auf der Oberfläche 2 der Druckplatte befindet sich ein sehr dünner Feuchtmittelfilm, wobei die Menge des aufgetragenen Feuchtmittels mit der Sensoreinrichtung 3 bestimmt wird. Die Sensoreinrichtung enthält einen Meßkopf 4. Die Empfangseinrichtung des Meßkopfes 4 ist aus der DE-OS 33 04 780 bekannt und besteht aus einer Empfangsoptik 5, einem als Diodenzeile 6 aufgebauten Detektorarray und einem den gesamten Meßkopf umschließenden Gehäuse 7. Die Diodenzeile 6 ist so angeordnet, daß sie optisch in der Ebene liegt, die vom einfallenden und spiegelnd reflektierten Strahl der Lichtquelle aufgespannt wird. Vorzugsweise wird die Orientierung des Meßkopfes wie in Fig. 1 angegeben gewählt. Der spiegelnd reflektierte Lichtstrahl fällt bei der gezeigten Ausführung der Erfindung auf eine der äußeren Dioden der Diodenzeile. Es ist aber auch möglich, das Meßverfahren zu nutzen, wenn der spiegelnde Reflex außerhalb der Diodenzeile liegt justiert ist.

Generell muß die Justage des Meßkopfes so erfolgen, daß die spiegelnd reflektierte Strahlung innerhalb der Diodenzeile auftrifft. Dies wird dadurch erreicht, daß die Beleuchtungseinrichtung 9 und der Meßkopf 4 senkrecht zur Plattenzylinderachse 12 ausgerichtet wird. Die Justage der Sensoreinrichtung 3 erfolgt weiterhin dadurch, daß durch Variation der Lage der Sensoreinrichtung relativ zur Plattennormalen die spiegelnde Reflexion auf vorgegebene Dioden eingestellt wird.

Der von der Diodenzeile erfaßte Streulichtverlauf (Streuindikatrix) wird einer Auswerteeinrichtung 8 zugeführt, welche eine der auf der Druckplatte befindlichen Feuchtmittelmenge entsprechende Kenngröße $T_N$ bildet. Die Abtastung der Diodenzeile mit der Auswerteeinrichtung erfolgt sequentiell oder auch parallel, insbesondere bei der parallelen Abtastung wird eine sehr hohe Meß- und Auswertegeschwindigkeit erzielt. Die Beleuchtung der Druckplatte erfolgt mit einer Beleuchtungseinrichtung 9, welche über eine Beleuchtungsoptik 10 definiert Licht auf die Druckplatte wirft. Die Anordnung von Beleuchtungseinrichtung und Sensoreinrichtung ist, wie oben bereits erläutert, so gewählt, daß die spiegelnde Reflexion innerhalb der Diodenzeile liegt. Es ist zur Auswertung des Streulichtverlaufs nicht nötig, die spiegelnde Reflexion in der Mitte der Diodenzeile auftreffen zu lassen. Wie in der Figur 1 durch die Winkel dargestellt, befindet sich die spiegelnde Reflexion außerhalb der Mitte der Diodenzeile. Selbst unter der Annahme, daß die spiegelnde Reflexion am Rande auftrifft oder gerade außerhalb der Diodenzeile liegt, ist eine Auswertung des Streulichtverlaufs zur Bildung einer Kenngröße möglich. Die Beleuchtungseinrichtung 9 erzeugt Licht im Infrarotbereich. Damit werden u.a. Störungen durch Fremdlicht weitgehend eliminiert.

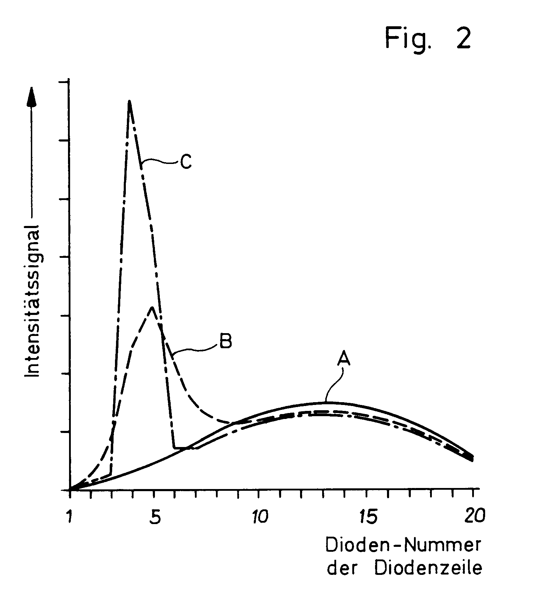

In Fig. 2 ist das Intensitätssignal des Streulichtverlaufs über der Dioden-Nummer der Diodenzeile 6 bei unterschiedlichen Feuchtmittelmengen aufgetragen. Die Diodenzeile weist, wie dieser Figur an der Abzisse zu entnehmen ist, 20 Dioden auf. An der Ordinate dieses Diagramms ist das Intensitätssignal, welches von den Dioden erfaßt wird, aufgetragen. Kurve A zeigt das Intensitätssignal einer feuchtmittelfreien, relativ rauhen Druckplatte, Kurve B zeigt das Intensitätssignal bei einer Druckplatte mit geringem Feuchtmittelauftrag, während Kurve C das Intensitätssignal bei starkem Feuchtmittelauftrag darstellt. Ganz deutlich ist aus diesem Diagramm zu erkennen, daß die spiegelnde Reflexion, die im Bereich der Dioden 4 und 5 liegt, mit der Erhöhung der Feuchtmittelmenge stark zunimmt.

Es hat sich als zweckmäßig erwiesen, als Kennzahl für die Befeuchtung bzw. für die Feuchtmittelmenge auf der Druckplatte den räumlichen Verlauf des Streulichts entsprechend der Dichtefunktion einer stochastischen Variablen durch Momente zu kennzeichnen.

Erfindungsgemäß wird die Schiefe der Verteilung, also das dritte Moment, als Maß für die auf der Druckplatte befindliche Feuchtmittelmenge bestimmt. Diese Schiefe bzw. Kenngröße $T_N$ ergibt sich nach der Beziehung

$$T_N = K \sum_{i=1}^{n} (i-M)^3 \, P_i$$

wobei ein normiertes Meßsignal $P_i$ nach der Beziehung

$$P_i = \frac{I_i}{\sum\limits_{i=1}^{n} I_i}$$

mit $I_i$ als Intensität der Strahlung auf einem Detektorelement i berechnet, und wobei der Wert M aus den Werten i und $P_i$ nach der Beziehung

$$M = \sum_{i=1}^{n} i \, P_i$$

ermittelt wird und K einen Skalierungsfaktor darstellt. n bezeichnet die Anzahl der Dioden auf der Diodenzeile. Mit dem Skalierungsfaktor K können z.B. die praxisrelevanten Meßwerte in eine Skala von 0 bis 100 gebracht werden, K wird im speziellen Fall zu eins gesetzt.

Zur Normierung der Kenngröße $T_N$ für bestimmte Druckplatten kann die Druckplatte im trockenen Zustand gemessen werden, so daß ausgehend von einer trockenen Druckplatte ein entsprechender Bezugspunkt bzw. Bezugspegel gebildet werden kann. Außerdem besteht durch die Messung der trockenen Druckplatte die Möglichkeit, druckende oder nichtdruckende Druckplattenstellen zu erkennen und damit die Position der Sensoreinrichtung automatisch auf einen nichtdruckenden Plattenbereich einzustellen. Die Messung erfolgt durch Abscannen der Platte sowohl in Drehrichtung als auch in Richtung der Plattenzylinderachse. Außerdem kann der Druckplattentyp, d.h. Material und Beschaffenheit der Druckplatte, durch Messung der trockenen Druckplatte aufgrund des unterschiedlichen Reflexionsverhaltens verschiedener Druckplattenarten automatisch festgestellt und bei der nachfolgenden Messung der Feuchtmittelmenge berücksichtigt werden. Dies ist beispielsweise dadurch möglich, daß in der Auswerteeinrichtung sämtliche Bezugswerte für verschiedene Druckplattentypen abgespeichert sind. Wird nun eine beliebige Druckplatte im trockenen Zustand gemessen, so kann durch Vergleich der gemessenen Kenngröße mit den abgespeicherten Bezugswerten der Druckplattentyp festgestellt und eine evtl. erforderliche Anpassung der Feuchtmittelmenge an den speziellen Druckplattentyp automatisch vorgenommen werden.

Die Sensoreinrichtung kann zur automatischen Einstellung und Regelung der optimalen Feuchtmittelmenge in einen Feuchtmittelmengen-Regelkreis eingebunden werden, so daß im Druckprozeß kein manuelles Eingreifen in die Feuchtmittelführung mehr nötig wird. Die Regelung oder Steuerung der Feuchtmittelmenge erfolgt bekannterweise durch Verstellung der Tauchwalzendrehzahl.

Es besteht mit der Sensoreinrichtung weiterhin die Möglichkeit, eine Rauheitsmessung an der trockenen Druckplatte durchzuführen, um so den Zustand der Druckplatte bezüglich des Verschleißes zu beurteilen. Daraus lassen sich Aussagen über die Standzeit bzw. die Weiterverwendbarkeit der Druckplatte machen. Anstelle der in Figur 1 gezeigten Diodenzeile, kann auch ein einziger Sensor die Streuindikatrix erfassen. Hierzu besteht z.B. die Möglichkeit, den Sensor durch eine lineare und/oder zirkulare Bewegung längs der Streuindikatrix zu führen und diese Streuindikatrix kontinuierlich während der Bewegung oder innerhalb bestimmter Meßzeiten zu erfassen.

Anstelle eines bewegbaren Sensors kann auch vor einem stationären Sensor eine Ablenkeinheit angeordnet werden, die auf den Sensor den Verlauf der Streuindikatrix überträgt. Eine Auswertung der Streuindikatrix erfolgt in der oben erwähnten Weise. Bei einer kontinuierlichen Meßwerterfassung und analoger Meßwertverarbeitung wird anstelle der Aufsummierung der diskreten Meßsignale direkt das Integral über den Verlauf der Streuindikatrix gebildet.

Bezugszeichenliste

| | |
|---|---|
| 1 | Druckplatte |
| 2 | Oberfläche |
| 3 | Sensoreinrichtung |
| 4 | Meßkopf |
| 5 | Empfangsoptik |
| 6 | Diodenzeile |
| 7 | Gehäuse |
| 8 | Auswerteeinrichtung |
| 9 | Beleuchtungseinrichtung |
| 10 | Beleuchtungsoptik |
| 11 | Plattenzylinder |
| 12 | Plattenzylinderachse |

**Patentansprüche**

1. Offsetdruckmaschine mit einer Sensoreinrichtung (3) zur Bestimmung der Feuchtmittelmenge auf einer Oberfläche (2), wobei die Sensoreinrichtung folgende Elemente umfaßt:
eine Beleuchtungseinrichtung (9), die ein Strahlenbündel in einen Bereich der Oberfläche (2) richtet,
eine Empfangseinrichtung (6), die so angeordnet ist,
daß sie optisch in einer Ebene liegt, die vom einfallenden Strahl und vom spiegelnd reflektierten Strahl aufgespannt wird, und
eine Auswerteeinrichtung (8), mit der aus den Meßwerten der Empfangseinrichtung (6) ein Maß für die Feuchtmittelmenge auf der Oberfläche (2) bestimmbar ist,
**dadurch gekennzeichnet,**
- daß es sich bei der Oberfläche um die Oberfläche einer Offsetdruckplatte handelt,
- daß die Beleuchtungseinrichtung (9) so angeordnet ist, daß sie das Strahlenbündel in einen nicht-druckenden Bereich der Offsetdruckplatte (1) richtet,
- daß die Empfangseinrichtung (6) derart angeordnet ist, daß sie die von der Offsetdruckplatte (1) reflektierte Strahlung innerhalb eines vorgegebenen Winkelbereichs in einzelnen Winkelsegmenten erfaßt und
- daß der spiegelnd reflektierte Strahl außerhalb der Mitte des detektierten Winkelbereichs liegt, und
- daß mit der Auswerteeinrichtung (8) aus den in den einzelnen Winkelsegmenten gemessenen Werten eine Kenngröße $T_N$

$$T_N = K \sum_{i=1}^{n} (i-M)^3 \, P_i$$

zur Bestimmung der Feuchtmittelmenge ermittelbar ist, wobei n der Anzahl der Meßwerte entspricht, $P_i$ ein normiertes Meßsignal nach der Beziehung

$$P_i = \frac{I_i}{\sum_{i=1}^{n} I_i}$$

darstellt, $I_i$ die Intensität der Strahlung des i-ten Meßwertes und K einen Skalierungsfaktor bezeichnet, und der Wert M aus den Größen i und $P_i$ nach der Beziehung

$$M = \sum_{i=1}^{n} i \, P_i$$

bestimmt wird.

2. Offsetdruckmaschine mit einer Sensoreinrichtung nach Anspruch 1,
**dadurch gekennzeichnet,**
daß die Empfangseinrichtung (6) eine Diodenzeile ist.

3. Offsetdruckmaschine mit einer Sensoreinrichtung nach Anspruch 1,
**dadurch gekennzeichnet,**
daß die Empfangseinrichtung (6) ein linear und/oder zirkular bewegbarer Sensor ist.

4. Offsetdruckmaschine mit einer Sensoreinrichtung nach Anspruch 1,
**dadurch gekennzeichnet,**
daß der spiegelnd reflektierte Strahl am Rande des detektierten Winkelbereiches liegt und von der Empfangseinrichtung (6) nicht erfaßt wird.

5. Offsetdruckmaschine mit einer Sensoreinrichtung nach einem oder mehreren der vorhergehenden Ansprüche,
**dadurch gekennzeichnet,**
daß die Wellenlänge des von der Beleuchtungseinrichtung (9) erzeugten Strahlenbündels im Infrarotbereich liegt.

6. Offsetdruckmaschine mit einer Sensoreinrichtung nach Anspruch 1,
**dadurch gekennzeichnet,**
daß die Kenngröße $T_N$ der Feuchtmittelmenge als Regelgröße für eine Feuchtmittelregelung in der Druckmaschine dient.

7. Offsetdruckmaschine mit einer Sensoreinrichtung nach Anspruch 6,
**dadurch gekennzeichnet,**
daß vorgesehen ist, daß in der Einrichtphase die Auswerteeinrichtung (8) die Kenngröße $T_N$ eines feuchtmittelfreien, nicht-druckenden Bereiches der Offset-Druckplatte (1) bestimmt,
daß sie diese Kenngröße $T_N$ mit entsprechenden, abgespeicherten Werten vergleicht und daß sie Information über die Art der Druckplatte (1) bereitstellt.

8. Offsetdruckmaschine mit einer Sensoreinrichtung nach Anspruch 6,
**dadurch gekennzeichnet,**
daß die Auswerteeinrichtung (8) bei Kenntnis der Art der Offsetdruckplatte (1) die Kenngröße $T_N$ eines feuchtmittelfreien, nicht-druckenden Bereiches der Offsetdruckplatte (1) mit einen entsprechend abgespeicherten Bezugswert vergleicht und bei einer Abweichung Information über den Abnutzungsgrad der Druckplatte (1) liefert.

## Claims

1. Offset printing machine comprising a sensor device (3) for determining the dampening-medium amount provided on a surface (2), said sensor device comprising the following elements:
   a lighting device (9) directing a beam of rays onto an area of said surface (2),
   a receiving device (6) which is arranged such that it is located in an optical plane exposed to an incident ray and to a specularly reflected ray, and
   an evaluating device (8) by means of which, on the basis of the values measured by the receiving device (6), a measure for the dampening-medium amount provided on said surface (2) can be determined,
   characterized in
   that said surface is the surface of an offset printing plate,
   that said lighting device (9) is arranged such that it directs the beams of rays onto a non-printing area of said offset printing plate (1),
   that said receiving device (6) is arranged such that it detects, in individual angular segments, the radiation reflected from said offset printing plate (1) within a given angular range,
   that the specularly reflected ray is out-of-center with respect to the angular range detected, and
   that, on the basis of the values measured in the individual angular segments, a characteristic quantity $T_N$

$$T_N = K \sum_{i=1}^{n} (i-M)^3 \, P_i$$

   can be determined by means of said evaluating device (8) for the purpose of determining the dampening-medium amount, n corresponding to the number of values measured, $P_i$ being a standardized measuring signal according to the equation

$$P_i = \frac{I_i}{\sum_{i=1}^{n} I_i} \, ,$$

$I_i$ representing the intensity of the radiation of the measured value i, K identifying a scaling factor, and the value M being determined on the basis of the quantities i and $P_i$ according to the equation

$$M = \sum_{i=1}^{n} i \, P_i \, .$$

2. Offset printing machine comprising a sensor device according to Claim 1,
   characterized in
   that the receiving device (6) is a row of diodes.

3. Offset printing machine comprising a sensor device according to Claim 1,
   characterized in
   that the receiving device (6) is a linearly and/or circularly movable sensor.

4. Offset printing machine comprising a sensor device according to Claim 1,
   characterized in
   that the specularly reflected ray is at the boundary of the detected angular range and is not detected by the receiving device (6).

5. Offset printing machine comprising a sensor device according to one or several of the preceding claims,
   characterized in
   that the wavelength of the beam of rays produced by the lighting device (9) lies in the infra-red range.

6. Offset printing machine comprising a sensor device according to Claim 1,
   characterized in
   that the characteristic quantity $T_N$ of the dampening-medium amount serves as a control value for a dampening-medium control within the printing machine.

7.  Offset printing machine comprising a sensor device according to Claim 6, characterized in that in the make-ready phase the evaluating device (8) determines the characteristic quantity $T_N$ of a dampening-medium-free and non-printing area of the offset printing plate (1), that it compares said characteristic quantity $T_N$ with corresponding values stored, and that it provides information on the type of said printing plate (1).

8.  Offset printing machine comprising a sensor device according to Claim 6, characterized in that, when knowing the type of the offset printing plate (1), the evaluating device (8) compares the characteristic quantity $T_N$ of a dampening-medium-free and non-printing area of said offset printing plate (1) with a corresponding reference value stored and provides information on the degree of wear of said printing plate (1), in the case of a deviation.

**Revendications**

1.  Machine d'impression offset comportant un dispositif détecteur (3) pour déterminer la quantité d'agent de mouillage sur une surface (2), le dispositif détecteur comprenant les éléments suivants :
    - un dispositif d'éclairement (9), qui dirige un faisceau de rayons sur une zone de la surface (2),
    - un dispositif de réception (6), qui est disposé de manière à être situé optiquement dans un plan qui est sollicité par un rayon incident et par un rayon réfléchi par effet de miroir, et
    - un dispositif d'évaluation (8), à l'aide duquel, à partir des valeurs de mesure du dispositif de réception (6), une mesure de la quantité d'agent de mouillage sur la surface (2) peut être déterminée,
    - caractérisée en ce que :
    - il s'agit pour la surface de la surface d'une plaque d'impression offset,
    - le dispositif d'éclairement (9) est disposé de telle sorte qu'il dirige le faisceau de rayons sur une zone de non-impression de la plaque d'impression offset (1),
    - le dispositif de réception (6) est disposé de telle sorte qu'il capte le rayonnement réfléchi par la plaque d'impression offset (1), à l'intérieur d'une plage angulaire prédéterminée, dans différents segments angulaires, et
    - le rayon réfléchi par effet de miroir est situé en dehors du milieu de la plage angulaire détectée, et
    - à l'aide du dispositif d'évaluation (8) et à partir des valeurs mesurées dans les différents segments angulaires, une grandeur caractéristique $T_N$ :

$$T_N = K \sum_{i=1}^{n} (i-M)^3 P_i$$

peut être obtenue pour la détermination de la quantité d'agent de mouillage, n désignant le nombre des valeurs de mesure, $P_i$ un signal normalisé de mesure déterminé d'après la relation :

$$P_i = \frac{I_i}{\sum\limits_{i=1}^{n} I_i}$$

$I_i$ désignant l'intensité du rayonnement de la i-ième valeur de mesure et K désignant un facteur de cadrage, tandis que la valeur M est déterminée à partir des grandeurs i et $P_i$ d'après la relation :

$$M = \sum_{i=1}^{n} i \, P_i$$

2.  Machine d'impression offset avec dispositif détecteur selon la revendication 1, caractérisée en ce que le dispositif de réception (6) est une ligne de diodes.

3.  Machine d'impression offset avec dispositif détecteur selon la revendication 1, caractérisée en ce que le dispositif de réception (6) est un détecteur déplaçable linéairement et/ou circulairement.

4.  Machine d'impression offset avec dispositif détecteur selon la revendication 1, caractérisée en ce que le rayon réfléchi par effet de miroir est situé au bord de la plage angulaire détectée et n'est pas capté par le dispositif de réception (6).

**5.** Machine d'impression offset avec dispositif détecteur selon une ou plusieurs des revendications précédentes, caractérisée en ce que la longueur d'onde du faisceau de rayons produit par le dispositif d'éclairement (9) est située dans le domaine infrarouge.

**6.** Machine d'impression offset avec dispositif détecteur selon la revendication 1, caractérisée en ce que la grandeur caractéristique $T_N$ de la quantité d'agent de mouillage sert de grandeur de régulation pour une régulation d'agent de mouillage dans la machine d'impression.

**7.** Machine d'impression offset avec dispositif détecteur selon la revendication 6, caractérisée en ce qu'il est prévu que, dans la phase de mise au point, le dispositif d'évaluation (8) détermine la grandeur caractéristique $T_N$ d'une zone de non-impression,et exempte d'agent de mouillage, de la plaque d'impression offset (1), qu'il compare cette grandeur caractéristique $T_N$ avec des valeurs mémorisées correspondantes et qu'il établisse une information concernant le type de la plaque d'impression (1).

**8.** Machine d'impression offset avec dispositif détecteur selon la revendication 6, selon la revendication 6, caractérisée en ce que le dispositif d'évaluation (8) effectue, lors de la connaissance du type de la plaque d'impression offset (1), une comparaison de la grandeur caractéristique $T_N$ d'une zone de non-impression, et exempte d'agent de mouillage, de la plaque d'impression offset (1) avec une valeur de référence mémorisée correspondante et, dans le cas d'une différence, il fournit une information concernant le degré d'usure de la plaque d'impression (1).

Fig. 1

EP 0 314 892 B1

Fig. 2